# EUROPÄISCHE PATENTANMELDUNG

(11) **EP 3 219 490 A1**
(43) Veröffentlichungstag der Anmeldung: **20.09.2017**
(21) Anmeldenummer: 16160555.5
(22) Anmeldetag: 16.03.2016
(51) Int. Cl.: B32B 37/22, A45D 37/00, B67C 3/26

(54) **VERFAHREN ZUR HERSTELLUNG UMHÜLLTER ARTIKEL**

(71) Anmelder: Covestro Deutschland AG, 51373 Leverkusen (DE); Epurex Films GmbH & Co. KG, 29699 Bomlitz (DE)
(72) Erfinder: Weiser, Marc-Stephan, 51377 Leverkusen (DE); Büschel, Gerd, 29664 Walsrode (DE)
(74) Vertreter: Levpat

(57) **Zusammenfassung**

Die vorliegende Erfindung betrifft ein Verfahren zur Herstellung umhüllter Artikel, wobei eine thermoplastische Folie, eine thermoplastische Schaumschicht und eine Funktionseinheit kontinuierlich im Rolle-zu-Rolle Verfahren zu einem umhüllten Artikel verarbeitet werden, der wenigstens eine thermoplastische Folie, eine thermoplastische Schaumschicht und eine Funktionseinheit umfasst, wobei die Schaumschicht die Funktionseinheit zumindest teilweise umhüllt und die thermoplastische Folie die Schaumschicht und die Funktionseinheit umschließt.

## Beschreibung

Die vorliegende Erfindung betrifft ein Verfahren zur Herstellung umhüllter Artikel, wobei eine thermoplastische Folie, eine thermoplastische Schaumschicht und eine Funktionseinheit kontinuierlich im Rolle-zu-Rolle Verfahren zu einem umhüllten Artikel verarbeitet werden, der wenigstens eine thermoplastische Folie, eine thermoplastische Schaumschicht und eine Funktionseinheit umfasst, wobei die Schaumschicht die Funktionseinheit zumindest teilweise umhüllt und die thermoplastische Folie die Schaumschicht und die Funktionseinheit umschließt.

Im Stand der Technik sind umhüllte Artikel wie zum Beispiel medizinische Sensoren zur Applikation auf der Haut bekannt. Diese umfassen häufig eine elektrische Funktionseinheit zur Bestimmung physiologischer Parameter wie Herzfrequenz oder Hautfeuchtigkeit, die ganz oder teilweise von einer Schaumschicht umhüllt sind. Mit Hilfe der Schaumschicht soll die Funktionseinheit einerseits vor mechanischen Beschädigungen geschützt und andererseits der Tragekomfort erhöht werden. Weiterhin ist in vielen Fällen auch eine Barriere-Folie vorhanden, die wiederum die Schaumschicht und die Funktionseinheit umschließt. Aufgabe der Barriere-Folie ist es, das Eindringen von Feuchtigkeit und Schmutz zu verhindern, da es ansonsten zu Beschädigungen der Funktionseinheit kommen kann.

Zur Herstellung der bekannten umhüllten Artikel ist es notwendig, die Schaumschicht und die Barriere-Folie miteinander in einem separaten Schritt zu verkleben. WO-A 2012/084859 offenbart einen umhüllten Artikel, der eine Schaumschicht eines thermoplastischen Polymerschaums umfasst, die zumindest bereichsweise über eine Schweißnaht mit der Barriere-Folie verbunden ist. WO-A 2012/084859 offenbart die Herstellung dieser umhüllten Artikel durch ein konventionelles Verfahren, nämlich durch Zurechtschneiden und Auflegen der einzelnen Schichten mit anschließender Verschweißung der Schaumschicht mit der Barriere-Folie.

Aufgabe der vorliegenden Erfindung ist es, ein einfaches, kontinuierliches Verfahren zur Herstellung umhüllter Artikel, insbesondere medizinischen Sensoren zur Applikation auf der Haut zur Verfügung zu stellen, das einerseits die Funktionseinheiten dieser Artikel ausreichend vor äußeren mechanischen Einflüssen schützt und eine ausreichende Dichtigkeit auch bei längerer Nutzung aufweist. Das erfindungsgemäße Verfahren zeichnet sich weiterhin dadurch aus, dass es kostensparend und einfach in der Durchführung ist, da beispielsweise auf aufwändige nasschemische Schritte zur Verbindung der einzelnen Schichten verzichtet werden kann.

Überraschenderweise konnte diese Aufgabe durch das erfindungsgemäße Verfahren gelöst werden, in dem zur Herstellung eines umhüllten Artikels
i. eine thermoplastische Folie (1) auf einer Rolle,
   eine thermoplastische Schaumschicht (2) auf einer Rolle, vorzugsweise eine thermoplastische Schaumschicht (2) auf einer Trägerschicht, auf einer Rolle, und eine Funktionseinheit (3) bereitgestellt werden, oder
   ein Laminat umfassend eine thermoplastische Folie (1) und eine thermoplastische Schaumschicht (2), und eine Funktionseinheit (3), vorzugsweise eine Funktionseinheit (3) auf einer Trägerschicht auf einer Rolle oder in einem Magazin enthaltend die Funktionseinheit (3), bereitgestellt werden,
ii. die thermoplastische Folie (1) und die thermoplastische Schaumschicht (2) oder das Laminat umfassend die thermoplastische Folie (1) und die thermoplastische Schaumschicht (2) über Rolle kontinuierlich zugeführt werden und die Funktionseinheit (3), ebenfalls kontinuierlich auf die thermoplastische Schaumschicht zugeführt wird, so dass die Funktionseinheit (3) wenigstens teilweise durch die Schaumschicht umhüllt wird,
iii. gegebenenfalls die thermoplastische Folie (1) und die thermoplastische Schaumschicht (2), die die Funktionseinheit (3) wenigstens bereichsweise umhüllt, bei einer Temperatur in einem Bereich von 60 bis 250 °C laminiert werden, vorzugsweise 60 bis 130 °C, so dass die Schaumeigenschaften weitgehend erhalten bleiben,
iv. Verschweißung der thermoplastischen Folie (1) und der thermoplastischen Schaumschicht (2) im Randbereich bei einem Druck in einem Bereich von 20 bis 300 bar, vorzugsweise von 150 bis 250 bar, und einer Temperatur in einem Bereich von 60 °C bis 250°C, vorzugsweise von 70 bis 200 °C, besonders bevorzugt von 80 bis 150°C für einen Zeitraum in einem Bereich von 1 bis 300 Sekunden, vorzugsweise 10 bis 200 Sekunden, besonders bevorzugt 30 bis 150 Sekunden, unter Erhalt einer Schweißnaht, vorzugsweise verläuft die Schweißnaht vollständig um die umhüllte Funktionseinheit herum,
v. gegebenenfalls Ausstanzen des umhüllten und verschweißten Artikels entlang der Schweißnaht.

Das erfindungsgemäße Verfahren zeichnet sich dadurch aus, dass die erfindungsgemäß thermoplastischen Einsatzstoffe direkt im Rolle-zu-Rolle Verfahren verarbeitet werden können und direkt zum umhüllten Artikel umgesetzte werden können. Weiterhin kann die thermoplastische Schaumschicht, vorzugsweise auf einer Trägerschicht, auf Rolle im Verfahren eingesetzt werden kann, so dass während des Verarbeitungsprozess die Schaumschicht in ihrer Eigenschaft als Schaum nur in dem gewünschtem Umfang beeinträchtigt wird. Die Verschweißung der thermoplastischen Folie und der thermoplastischen Schaumschicht erfolgt direkt nach der Laminierung im kontinuierlichen Verfahren. Es war überraschend, dass sich die thermoplastische Schaumschicht problemlos im Rolle-zu-Rolle Verfahren verarbeiten lässt Zudem ermöglicht das erfindungsgemäße Verfahren eine einfache Herstellung umhüllter Artikel, ohne dass nasschemische Reaktionsschritte oder Vergussmaterialien zur Herstellung des umhüllten Artikels erforderlich sind.

Die thermoplastische Schaumschicht (2) umfasst einen thermoplastischen Polymerschaum. Unter einem thermoplastischen Polymerschaum wird vorliegend ein Schaum verstanden, der ein thermoplastisches Polymer enthält bzw. der im Wesentlichen aus einem thermoplastischen Polymer besteht. Wie dem Fachmann bekannt ist, zeichnen sich thermoplastische Polymere dadurch aus, dass sie durch Erwärmung in den schmelzflüssigen Zustand überführt werden können. Dies ermöglicht es, den thermoplastischen Polymerschaum leicht zumindest teilweise mit der thermoplastischen Folie (1) zu verschweißen, so dass kein zusätzlicher Klebstoff notwendig ist, um diese Verbindung herzustellen. Darüber hinaus zeichnet sich die erhaltene Schweißnaht durch eine hohe Dichtigkeit und eine besondere mechanische Stabilität aus. Weiterhin zeichnet sich die thermoplastische Schaumschicht dadurch aus, dass sie vorzugsweise auf einer Trägerschicht auf Rolle in beliebigen Dicken, je nach Anforderungsprofil des herzustellenden umhüllten Artikels bereitgestellt werden kann. Hierbei ist es auch möglich, dass mehrere Lagen der thermoplastischen Schaumschicht (2) übereinander in das Verfahren eingebracht werden, bevor die Funktionseinheit zugeführt wird um entsprechend hohe Schaumdicken zu erzielen. Eine einzelne thermoplastische Schaumschicht (2) kann eine Dicke von 0,025 mm bis 10 mm, vorzugsweise von 0,1 bis 6,0 mm, besonders bevorzugt von 0,5 bis 3,0 mm aufweisen.

Im Folgenden werden die einzelnen Schritte des erfindungsgemäßen Verfahrens näher erläutert.

In einer Ausführungsform der Erfindung werden in Schritt i. die einzelnen Schichten für den umhüllten Artikel jeweils auf einer Rolle bereit gestellt. Die thermoplastische Schaumschicht (2) kann vorteilhaft auf einer Trägerschicht bereit gestellt werden.

In einer Ausführungsform kann das Laminat umfassend eine thermoplastische Folie (1) und eine thermoplastische Schaumschicht (2), vorzugsweise auf einer Trägerschicht, bei einer Temperatur von 60 bis 250 °C, vorzugsweise bei einer Temperatur von 60 bis 130 °C in einem vorgelagerten Schritt laminiert werden, so dass die Schaumstruktur von (2) weitgehend erhalten bleibt, und wird auf Rolle bereitgestellt. Die Laminierung dieser beiden Schichten kann über Thermo-Laminieranlagen wie Walzen- oder Doppelbandpressen und einer Temperatur von 60 bis 250 °C, vorzugsweise bei einer Temperatur von 60 bis 130 °C erfolgen (Thermop-Laminierung). Die Laminierbedingungen sind so zu wählen, dass der Schaumcharakter der thermoplastischen Schaumschicht erhalten bleibt, wie beispielsweise durch geringen Druck im Bereich von 5 bis 10 bar oder über fixierte Laminier-Spalthöhe zwischen den Walzen oder Doppelbändern.

In einer alternativen Ausführungsform kann die thermoplastische Schaumschicht (2) vor Schritt ii. auf eine Temperatur von 120 bis 250 °C, vorzugsweise von 120 bis 200 °C erwärmt werden und durch Aufbringen der Funktionseinheit (3) thermoplastisch verformt werden, oder durch Aufbringen eines auf eine Temperatur von 120 bis 250 °C, vorzugsweise von 120 bis 200 °C erwärmten Stanzwerkzeugs auf die thermoplastische Schaumschicht (2), thermoplastische Verformung der Schicht (2) im Bereich des Stanzwerkzeugs und Zuführung der Funktionseinheit (3) in den so vorgeformten Bereich. So können auch großvolumige Funktionseinheiten (3), wie beispielsweise Batterien in den Schaum eingepasst werden. Die Erwärmung kann beispielsweise über Infrarotstrahlung erfolgen. Die Funktionseinheit (3) kann wahlweise auf einer Trägerschicht auf Rolle bereit gestellt werden oder aber in einem Magazinenthaltend die Funktionseinheit (3) umfasst, dem kontinuierlichen Prozess zugeführt werden.

In Schritt ii. wird die thermoplastische Folie (1) und die thermoplastische Schaumschicht (2), vorzugsweise die thermoplastische Schaumschicht (2) auf einer Trägerschicht, oder das Laminat umfassend die thermoplastische Folie (1) und die thermoplastische Schaumschicht (2), über Rolle kontinuierlich zugeführt und die Funktionseinheit (3) auf die thermoplastische Schaumschicht (2) zugeführt wird, so dass die Funktionseinheit (3) wenigstens teilweise durch die Schaumschicht umhüllt wird.

In einer Ausführungsform kann die Funktionseinheit (3), vorzugsweise auf einer Trägerschicht, über Rolle kontinuierlich auf die thermoplastische Schaumschicht (2) zugeführt werden, so dass die Funktionseinheit (3) wenigstens teilweise durch die Schaumschicht umhüllt wird.

In einer anderen Ausführungsform kann die Funktionseinheit (3) durch einen Pick-and-Place Prozess aus einem Magazin umfassend die Funktionseinheit (3) kontinuierlich auf die thermoplastische Schaumschicht (2) zugeführt werden, so dass die Funktionseinheit (3) wenigstens teilweise durch die Schaumschicht umhüllt wird.

Die gegebenenfalls anwesenden Trägerschichten können beim Zusammenführen der Schichten (1), (2) und (3) über das Rolle-zu-Rolle Verfahren entfernt werden.

In einer weiteren Ausführungsform kann in Schritt i. eine weitere thermoplastische Schaumschicht (2') und/oder eine weitere thermoplastische Folie (1') auf einer Rolle bereitgestellt werden und in Schritt ii. kann die weitere thermoplastische Schaumschicht (2') und/oder die thermoplastische Folie (1') kontinuierlich über Rolle so zugeführt werden, dass die Funktionseinheit (3) entweder von beiden Seiten mit der thermoplastischen Schaumschicht (2 und 2') bedeckt ist oder von einer Seite mit der thermoplastischen Schaumschicht (2) und von der anderen Seite von der thermoplastischen Folie (1') bedeckt ist.

In einer anderen Ausführungsform kann die thermoplastische Folie (1) oder (1') eine Klebstoffschicht auf der von der Schaumschicht (2) abgewandten Seite umfassen, wobei diese Klebstoffschicht mit einer Schutzschicht versehen sein kann. Die Klebstoffschicht kann beispielsweise einen Acrylatkleber umfassen.

Im optionalen Schritt iii. werden die thermoplastische Folie (1) und die thermoplastische Schaumschicht (2), die die Funktionseinheit (3) wenigstens bereichsweise umhüllt, bei einer Temperatur von 60 bis 250 °C, vorzugsweise bei einer Temperatur von 60 bis 130 °C laminiert, so dass die Schaumschicht von (2) weitgehend erhalten bleibt. Die Laminierung kann über Thermo-Laminieranlagen wie Walzen- oder Doppelbandpressen und einer Temperatur von 60 bis 250 °C, vorzugsweise bei einer Temperatur von 60 bis 130 °C erfolgen (Thermo-Laminierung). Die Laminierbedingungen sind so zu wählen, dass der Schaumcharakter der thermoplastischen Schaumschicht erhalten bleibt, wie beispielsweise durch geringen Druck im Bereich von 5 bis 10 bar oder über fixierte Laminier-Spalthöhe zwischen den Walzen oder Doppelbändern.

Sofern in Schritt i. ein Laminat umfassend die thermoplastische Folie (1) und die thermoplastische Schaumschicht (2) auf Rolle bereitgestellt wird, so ist Schritt iii. nicht erforderlich.

Sofern eine weitere thermoplastische Schaumschicht (2') und/oder eine weitere thermoplastische Folie (1') in Schritt ii zugeführt werden, können diese weiteren Schichten in Schritt iii. ebenfalls mit den anderen Schichten laminiert werden.

In Schritt iv. erfolgt die Verschweißung der thermoplastischen Folie (1) und der thermoplastischen Schaumschicht (2) im Randbereich bei einem Druck von 50 bis 300 bar, vorzugsweise von 150 bis 250 bar und einer Temperatur im Bereich von 60 °C bis 250°C, vorzugsweise von 70 bis 200 °C, besonderes bevorzugt von 80 bis 150°C für 1 bis 300 Sekunden, vorzugsweise 10 bis 200 Sekunden, besonders bevorzugt 30 bis 150 Sekunden. Durch Druck und Temperatur wird die thermoplastische Schaumschicht in einen plastischen, klebrigen Zustand überführt, wobei die Verschweißung mit der thermoplastischen Folie ohne zusätzlichen Klebstoff ermöglicht wird. Die Schweißnaht zeichnet sich durch eine hohe Dichtigkeit und eine besondere mechanische Stabilität aus.

In einer anderen Ausführungsform kann die Verschweißung in Schritt iv. im Ultraschall-Schweißverfahren erfolgen.

Sofern in einer Ausführungsform des erfindungsgemäßen Verfahrens weitere Schichten (1') und/oder (2') zugeführt werden, so erfolgt die Verschweißung auch mit diesen Schichten.

In einer weiteren Ausführungsform kann die Schweißnaht in Schritt iv. die Funktionseinheit (3) vollständig einschließen.

Im optionalen Schritt v. kann der umhüllte Artikel entlang der Schweißnaht ausgestanzt werden. Alternativ kann der umhüllte Artikel wieder auf Rolle bereitgestellt werden, um für mögliche weitere kontinuierliche Verarbeitungsschritte eingesetzt werden zu können.

Gemäß einer bevorzugten Ausführungsform der Erfindung ist vorgesehen, dass die thermoplastische Schaumschicht lineare Polyurethane enthält. Unter linearen Polyurethanen werden vorliegend ganz oder im wesentlichen unverzweigte Polymere verstanden, die in der Polymerkette Urethangruppen enthalten. Thermoplastische Schäume, die lineare Polyurethane enthalten bzw. im Wesentlichen hieraus bestehen, zeichnen sich durch eine besonders hohe Elastizität und Komprimierbarkeit sowie eine besonders gute Verschweißbarkeit aus.

Weiter bevorzugt ist, wenn der Polymerschaum erhältlich ist, indem eine Zusammensetzung umfassend eine wässrige, anionisch hydrophilierte Dispersion der linearen Polyurethane aufgeschäumt und getrocknet wird.

Die Polyurethandispersion kann dabei Polyurethane enthalten, deren freie Isocyanatgruppen zumindest teilweise mit anionischen oder potentiell anionischen Hydrophilierungsmitteln umgesetzt sind. Geeignete Hydrophilierungsmittel sind beispielsweise Verbindungen, die gegenüber Isocyanatgruppen reaktive funktionelle Gruppen wie Amino-, Hydroxy- oder Thiolgruppen und weiterhin Säure- oder Säureaniongruppen wie Carboxylat-, Sulfonat- oder Phosphonatgruppen aufweisen.

Das Aufschäumen kann durch mechanisches Rühren der Zusammensetzung bei hohen Drehzahlen, durch Schütteln oder durch Entspannung eines Treibgases erfolgen. Hierbei können Stickstoff oder andere Gase in die Zusammensetzung eingetragen werden. Besonders bevorzugt wird Luft in die Zusammensetzung eingetragen.

Die Trocknung erfolgt vorzugsweise bei einer Temperatur zwischen 30 und 200 und bevorzugt zwischen 30 und 140 °C. Zur Trocknung können an sich bekannten Heiz- und Trockenapparaten, wie (Umluft-) Trockenschränken, Heißluft, IR-Strahlern oder Mikrowellentrocknung eingesetzt werden.

Der Polymer-Schaum hat vor seiner Trocknung typischerweise eine Schaumdichte von ≥ 50 g/Liter bis ≤ 800 g/Liter, bevorzugt von ≥ 100 g/Liter bis ≤ 500 g/Liter, besonders bevorzugt von ≥ 100 g/Liter bis ≤ 400 g/Liter (Masse aller Einsatzstoffe [in g] bezogen auf das Schaumvolumen von einem Liter).

Nach seiner Trocknung hat der Schaum eine mikroporöse, zumindest teilweise offenporige Struktur mit miteinander kommunizierenden Zellen. Die Dichte des getrockneten Schaums ist typischerweise ≤ 0,5 g/cm³, bevorzugt ≤ 0,35 g/cm³, besonders bevorzugt ≥ 0,01 g/cm³ und ≤ 0,3 g/cm³ und ganz besonders bevorzugt ≥ 0,05 g/cm³ und ≤ 0,3 g/cm³.

Im komprimierten Zustand kann der Schaum eine Dichte von ≥ 0,1 g/cm³ bis ≤ 1,8 g/cm³ aufweisen. Die Dichte kann auch in einem Bereich von ≥ 0,5 g/cm³ bis ≤ 1,6 g/cm³ oder von ≥ 0,8 g/cm³ bis ≤ 1,5 g/cm³ liegen. Wenn der Schaum besonders stark komprimiert wird, kann er zu einem Film oder einer Folie verformt werden.

Der Polymerschaum kann mit Hilfe bekannter Verfahren auf eine Trägerschicht aufgebracht werden und dann auf eine Rolle gebracht werden. Die Schaumschicht kann eine Dicke von ≥ 0,025 mm bis ≤ 10,0 mm, vorzugsweise von 0,1 mm bis ≤ 6,0 mm, besonders bevorzugt von ≥ 0,5 mm bis ≤ 3,0 mm aufweisen.

Als Trägerschicht kommen bekannte Materialien in Frage wie beispielsweise, Papier, PET-Folie, Polycarbonat (PC) -Folie oder Thermoplastische Polyurethan (TPU)-Folie

Die thermoplastische Schaumschicht (2) kann gleich oder verschieden zu der gegebenenfalls weiteren thermoplastischen Schaumschicht (2') sein, vorzugsweise sind diese jedoch gleich und umfassen den vorstehend beschriebenen Polymerschaum. Die thermoplastischen Schaumschichten (2) und gegebenenfalls (2') können unterschiedliche Dicken und/oder unterschiedliche Schaumdichten aufweisen, wobei diese jedoch in den vorstehenden Bereichen liegen.

In Weiterbildung der Erfindung ist vorgesehen, dass die wässrige, anionisch hydrophilierte Dispersion linearer Polyurethane erhältlich ist, indem
A) isocyanatfunktionelle Prepolymere bereitgestellt werden, die aus einer Reaktionsmischung umfassend
   A1) organische Polyisocyanate und
   A2) polymere Polyole, bevorzugt mit zahlenmittleren Molekulargewichten von ≥ 400 g/mol bis ≤ 8000 g/mol und OH-Funktionalitäten von ≥ 1,5 bis ≤ 6,
   erhältlich sind und
B) die freien NCO-Gruppen der Prepolymere ganz oder teilweise mit
   B1) isocyanatreaktiven anionischen oder potentiell anionischen Hydrophilierungsmitteln
unter Kettenverlängerung umgesetzt werden und die Prepolymere vor, während oder nach Schritt B) in Wasser dispergiert werden, wobei weiterhin in der Reaktionsmischung vorliegende potentiell ionische Gruppen durch teilweise oder vollständige Umsetzung mit einem Neutralisationsmittel in die ionische Form überführt werden.

Bevorzugte wässrige, anionische Polyurethan-Dispersionen haben einen niedrigen Grad an hydrophilen anionischen Gruppen, bevorzugt von ≥ 0,1 bis ≤ 15 Milliequivalenten pro 100 g Festharz.

Um eine gute Sedimentationsstabilität zu erreichen, liegt die zahlenmittlere Teilchengröße der speziellen Polyurethan-Dispersionen bevorzugt bei ≤ 1500 nm, besonders bevorzugt bei ≤ 1000 nm, bestimmt mittels Laserkorrelations-Spektroskopie.

Die aminofunktionellen Verbindungen in Stufe B) werden in solch einer Menge eingesetzt, dass das Äquivalentverhältnis von isocyanatreaktiven Aminogruppen dieser Verbindungen zu den freien Isocyanatgruppen des Prepolymers ≥ 40% bis ≤ 150%, bevorzugt zwischen ≥ 50% und ≤ 125%, besonders bevorzugt zwischen ≥ 60% und ≤ 120% beträgt.

Geeignete Polyisocyanate der Komponente A1) sind aromatische, araliphatische, aliphatische oder cycloaliphatische Polyisocyanate mit einer NCO-Funktionalität von ≥ 2.

Beispiele geeigneter Polyisocyanate sind 1,4-Butylendiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'- und/oder 2,4'- und/oder 4,4'-Diphenylmethandiisocyanat (MDI), 1,3- und/oder 1,4-Bis-(2-isocyanato-prop-2-yl)-benzol (TMXDI), 1,3-Bis- (isocyanatomethyl)benzol (XDI), sowie Alkyl-2,6-diisocyanatohexanoate (Lysindiisocyanate) mit C₁-bis C₈-Alkylgruppen.

Neben den vorstehend genannten Polyisocyanaten können anteilig auch modifizierte Diisocyanate mit Uretdion-, Isocyanurat-, Urethan-, Allophanat-, Biuret-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan- 4,4',4"-triisocyanat mit eingesetzt werden.

Bevorzugt handelt es sich um Polyisocyanate oder Polyisocyanatgemische der vorstehend genannten Art mit ausschließlich aliphatisch und/oder cycloaliphatisch gebundenen Isocyanatgruppen und einer mittleren NCO-Funktionalität der Mischung von ≥ 2 bis ≤ 4, bevorzugt ≥ 2 bis ≤ 2,6 und besonders bevorzugt ≥ 2 bis ≤ 2,4.

Besonders bevorzugt werden in A1) 1,6-Hexamethylendiisocyanat, Isophorondiisocyanat, die isomeren Bis(4,4'-isocyanatocyclohexyl)methane sowie deren Mischungen eingesetzt.

In A2) werden bevorzugt polymere Polyole mit einem zahlenmittleren Molekulargewicht von ≥ 400 g/mol bis ≤ 8000 g/mol, bevorzugt von ≥ 400 g/mol bis ≤ 6000 g/mol und besonders bevorzugt von ≥ 600 g/mol bis ≤ 3000 g/mol eingesetzt. Diese weisen bevorzugt eine OH-Funktionalität von ≥ 1,5 bis ≤ 6, besonders bevorzugt von ≥ 1,8 bis ≤ 3, ganz besonders bevorzugt von ≥ 1,9 bis ≤ 2,1 auf.

Geignete Polyole sind beispielsweise Polyesterpolyole, Polyacrylatpolyole, Polyurethanpolyole, Polycarbonatpolyole, Polyetherpolyole, Polyesterpolyacrylatpolyole, Polyurethanpolyacrylatpolyole, Polyurethanpolyesterpolyole, Polyurethanpolyetherpolyole, Polyurethanpolycarbonatpolyole und Polyesterpolycarbonatpolyole. Diese können in A2) einzeln oder in beliebigen Mischungen untereinander eingesetzt werden.

Geignete Polyesterpolyole sind Polykondensate aus Di- sowie gegebenenfalls Tri- und Tetraolen und Di- sowie gegebenenfalls Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(l,6) und Isomere, Neopentylglykol oder Hydroxypivalinsäureneopentylglykolester, wobei Hexandiol(l,6) und Isomere, Neopentylglykol und Hydroxypivalinsäureneopenthylglykolester bevorzugt sind. Daneben können auch Polyole wie Trimethylolpropan, Glycerin, Erythrit, Pentaerythrit, Triemthylolbenzol oder Trishydroxyethylisocyanurat eingesetzt werden.

Als Dicarbonsäuren können Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2- Methylbernsteinsäure, 3,3-Diethylglutarsäure und/oder 2,2-Dimethylbernsteinsäure eingesetzt werden. Als Säurequelle können auch die entsprechenden Anhydride verwendet werden.

Sofern die mittlere Funktionalität des zu veresternden Polyols ≥ 2 ist, können zusätzlich auch Monocarbonsäuren wie Benzoesäure und Hexancarbonsäure mit verwendet werden.

Bevorzugte Säuren sind aliphatische oder aromatische Säuren der vorstehend genannten Art. Besonders bevorzugt sind Adipinsäure, Isophthalsäure und gegebenenfalls Trimellithsäure.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind Caprolacton, Butyrolacton und Homologe. Bevorzugt ist Caprolacton.

Ebenfalls können in A2) Hydroxylgruppen aufweisende Polycarbonate, bevorzugt Polycarbonatdiole, mit zahlenmittleren Molekulargewichten von ≥ 400 g/mol bis ≤ 8000 g/mol, bevorzugt ≥ 600 g/mol bis ≤ 3000 g/mol eingesetzt werden. Diese sind durch Reaktion von Kohlensäurederivaten wie Diphenylcarbonat, Dimethylcarbonat oder Phosgen mit Polyolen, bevorzugt Diolen, erhältlich.

Beispiele geeigneter Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3- propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art.

Bevorzugt enthält das Polycarbonatdiol ≥ 40 Gewichts-% bis ≤ 100 Gewichts-% Hexandiol, bevorzugt 1,6-Hexandiol und/oder Hexandiolderivate. Solche Hexandiolderivate basieren auf Hexandiol und weisen neben endständigen OH-Gruppen auch Ester- oder Ethergruppen auf. Solche Derivate sind durch Reaktion von Hexandiol mit überschüssigem Caprolacton oder durch Veretherung von Hexandiol mit sich selbst zum Di- oder Trihexylenglykol erhältlich.

Statt oder zusätzlich zu reinen Polycarbonatdiolen können auch Polyether-Polycarbonatdiole in A2) eingesetzt werden.

Die Hydroxylgruppen aufweisenden Polycarbonate sind bevorzugt linear gebaut.

Ebenfalls können in A2) Polyetherpolyole eingesetzt werden.

Geeignet sind beispielsweise Polytetramethylenglykolpolyether, wie sie durch Polymerisation von Tetrahydrofuran mittels kationischer Ringöffhung erhältlich sind.

Ebenfalls geeignete Polyetherpolyole sind die Additionsprodukte von Styroloxid, Ethylenoxid, Propylenoxid, Butylenoxid und/oder Epichlorhydrin an di- oder polyfunktionelle Startermoleküle. Polyetherpolyole, basierend auf der zumindest anteiligen Addition von Ethylenoxid an di- oder polyfunktionelle Startermoleküle, können auch als Komponente A4) eingesetzt werden (nichtionische Hydrophilierungsmittel).

Als geeignete Startermoleküle eingesetzt werden können beispielsweise Wasser, Butyldiglykol, Glycerin, Diethylenglykol, Trimethyolpropan, Propylenglykol, Sorbit, Ethylendiamin, Triethanolamin oder 1,4-Butandiol. Bevorzugte Startermoleküle sind Wasser, Ethylenglykol, Propylenglykol, 1,4-Butandiol, Diethylenglykol und Butyldiglykol.

Besonders bevorzugte Ausführungsformen der Polyurethan-Dispersionen enthalten als Komponente A2) eine Mischung aus Polycarbonatpolyolen und Polytetramethylenglykolpolyolen, wobei in dieser Mischung der Anteil an Polycarbonatpolyolen in der Mischung ≥ 20 Gewichts-% bis ≤ 80 Gewichts-% und der Anteil an Polytetramethylenglykolpolyolen ≥ 20 Gewichts-% bis ≤ 80 Gewichts-% beträgt. Bevorzugt ist ein Anteil von ≥ 30 Gewichts-% bis ≤ 75 Gewichts-% an Polytetramethylenglykolpolyolen und ein Anteil von ≥ 25 Gewichts-% bis ≤ 70 Gewichts-% an Polycarbonatpolyolen. Besonders bevorzugt ist ein Anteil von ≥ 35 Gewichts-% bis ≤ 70 Gewichts-% an Polytetramethylenglykolpolyolen und ein Anteil von ≥ 30 Gewichts-% bis ≤ 65 Gewichts-% an Polycarbonatpolyolen, jeweils mit der Maßgabe, dass die Summe der Gewichtsprozente der Polycarbonatpolyole und Polytetramethylenglykolpolyole ≤ 100 Gewichts-% ergibt und der Anteil der Summe der Polycarbonatpolyole und Polytetramethylenglykolpolyetherpolyole an der Komponente A2) ≥ 50 Gewichts-%, bevorzugt ≥ 60 Gewichts-% und besonders bevorzugt ≥ 70 Gewichts-% beträgt.

Unter isocyanatreaktiven anionischen oder potentiell anionischen Hydrophilierungsmitteln der Komponente B1) werden sämtliche Verbindungen verstanden, die mindestens eine isocyanatreaktive Gruppe wie eine Amino-, Hydroxy- oder Thiolgruppe sowie mindestens eine Funktionalität, die bei Wechselwirkung mit wässrigen Medien ein pH-Wert-abhängiges Dissoziationsgleichgewicht eingeht und auf diese Weise negativ oder neutral geladen sein kann, wie zum Beispiel -COO-M⁺, -SO₃ ⁻M⁺, -PO(O⁻M⁺)₂, wobei M⁺ ein Metallkation, H⁺, NHa⁺ oder NHR₃⁺ und R jeweils ein C₁-C₁₂-Alkylrest, ein C₅-C₆-Cycloalkylrest und/oder ein C₂-C₄-Hydroxyalkylrest sein kann, aufweisen.

Vorzugsweise sind die isocyanatreaktiven anionischen oder potentiell anionischen Hydrophilierungsmittel isocyanatreaktive aminofunktionelle anionische oder potentiell anionische Hydrophilierungsmittel.

Geeignete anionisch oder potentiell anionisch hydrophilierende Verbindungen sind Mono- und Diaminocarbonsäuren, Mono- und Diaminosulfonsäuren sowie Mono- und Diaminophosphonsäuren und ihre Salze. Beispiele solcher anionischen oder potentiell anionischen Hydrophilierungsmittel sind N-(2-Aminoethyl)-ß-alanin, 2-(2-Amino-ethylamino)-ethansulfonsäure, Ethylendiaminpropyl- oder -butylsulfonsäure, 1,2- oder 1,3-Propylendiamin-β-ethylsulfonsäure, Glycin, Alanin, Taurin, Lysin, 3,5-Diaminobenzoesäure und das Additionsprodukt von IPDA und Acrylsäure (EP- A 0 916 647, Beispiel 1). Weiterhin kann die aus der WO-A 01/88006 bekannte Cyclohexylaminopropansulfonsäure (CAPS) als anionisches oder potentiell anionisches Hydrophilierungsmittel verwendet werden.

Bevorzugte anionische oder potentiell anionische Hydrophilierungsmittel der Komponente B1) sind solche der vorstehend genannten Art, die über Carboxylat- beziehungsweise Carobonsäuregruppen und/oder Sulfonatgruppen verfügen. Beispiele sind die Salze von N-(2-Aminoethyl)-β-alanin, der 2-(2-Aminoethylamino)ethansulfonsäure oder des Additionsproduktes von IPDA und Acrylsäure (EP-A 0 916 647, Beispiel 1).

Zur Hydrophilierung können auch Mischungen aus anionischen beziehungsweise potentiell anionischen Hydrophilierungsmitteln und nichtionischen Hydrophilierungsmitteln verwendet werden.

In einer weiteren Ausführungsform umfasst die Reaktionsmischung in Schritt A) weiterhin:
A3) hydroxyfunktionelle Verbindungen mit Molekulargewichten von ≥ 62 g/mol bis ≤ 399 g/mol.

In A3) können Polyole des genannten Molekulargewichtsbereichs mit bis zu 20 Kohlenstoffatomen, wie Ethylenglykol, Diethylenglykol, Triethylenglykol, 1,2-Propandiol, 1,3-Propandiol, 1,4- Butandiol, 1,3-Butylenglykol, Cyclohexandiol, 1 ,4-Cyclohexandimethanol, 1,6-Hexandiol, Neopentylglykol, Hydrochinondihydroxyethylether, Bisphenol A (2,2-Bis(4-hydroxyphenyl)propan), hydriertes Bisphenol A, (2,2-Bis(4-hydroxycyclohexyl)propan), Trimethylolpropan, Glycerin, Pentaerythrit sowie deren beliebige Mischungen untereinander eingesetzt werden.

Geeignet sind auch Esterdiole des genannten Molekulargewichtsbereichs wie α-Hydroxybutyl-ε-hydroxycapronsäureester, ω-Hydroxyhexyl-γ-hydroxybuttersäureester, Adipinsäure-(β-hydroxyethyl)ester oder Terephthalsäurebis(β-hydroxyethyl)-ester.

Ferner können in A3) auch monofunktionelle, isocyanatreaktive, Hydroxylgruppenhaltige Verbindungen eingesetzt werden. Beispiele solcher monofunktionellen Verbindungen sind Ethanol, n-Butanol, Ethylenglykolmonobutylether, Diethylenglykolmonomethylether, Ethylenglykolmonobutylether, Diethylenglykolmonobutylether, Propylenglykolmonomethylether, Dipropylenglykolmonomethylether, Tripropylenglykolmonomethylether, Dipropylenglykolmonopropylether, Propylenglykolmonobutylether, Dipropylenglykolmonobutylether, Tripropylenglykolmonobutylether, 2- Ethylhexanol, 1-Octanol, 1-Dodecanol, 1-Hexadecanol.

Bevorzugte Verbindungen der Komponente A3) sind 1,6-Hexandiol, 1,4-Butandiol, Neopentylglykol und Trimethylolpropan.

In einer weiteren Ausführungsform umfasst die Reaktionsmischung in Schritt A) weiterhin:
A4) isocyanatreaktive, anionische oder potentiell anionische und gegebenenfalls nichtionische Hydrophilierungsmittel.

Unter anionisch beziehungsweise potentiell anionisch hydrophilierenden Verbindungen der Komponente A4) werden sämtliche Verbindungen verstanden, die mindestens eine isocyanatreaktive Gruppe wie eine Amino-, Hydroxyl- oder Thiolgruppe sowie mindestens eine Funktionalität, die bei Wechselwirkung mit wässrigen Medien ein pH-Wert-abhängiges Dissoziationsgleichgewicht eingeht und auf diese Weise negativ oder neutral geladen sein kann, wie zum Beispiel -COO⁻M⁺, -SO₃⁻M⁺, -PO(O⁻M⁺)₂, wobei M⁺ ein Metallkation, H⁺, NH₄⁺oder NHR₃⁺ und R jeweils ein C₁-C₁₂-Alkylrest, ein C₅-C₆-Cycloalkylrest und/oder ein C₂-C₄-Hydroxyalkylrest sein kann, aufweisen. Geeignete anionisch oder potentiell anionisch hydrophilierende Verbindungen sind zum Beispiel Mono- und Dihydroxycarbonsäuren, Mono- und Dihydroxysulfonsäuren sowie Mono- und Dihydroxyphosphonsäuren und ihre Salze. Beispiele solcher anionischen beziehungsweise potentiell anionischen Hydrophilierungsmittel sind Dimethylolpropionsäure, Dimethylolbuttersäure, Hydroxypivalinsäure, Äpfelsäure, Zitronensäure, Glykolsäure, Milchsäure und das propoxylierte Addukt aus 2-Butendiol und NaHSO₃, wie es in der DE-A 2 446 440, Seite 5 - 9, Formel I-III beschrieben ist.

Bevorzugte anionische oder potentiell anionische Hydrophilierungsmittel der Komponente A4) sind solche der vorstehend genannten Art, die über Carboxylat- beziehungsweise Carbonsäuregruppen und/oder Sulfonatgruppen verfügen.

Besonders bevorzugte anionische oder potentiell anionische Hydrophilierungsmittel sind solche, die Carboxylat- beziehungsweise Carbonsäuregruppen als ionische oder potentiell ionische Gruppen enthalten wie Dimethylolpropionsäure, Dimethylolbuttersäue und Hydroxypivalinsäure und/oder deren Salze.

Geeignete nichtionisch hydrophilierende Verbindungen der Komponente A4) sind zum Beispiel auch Polyoxyalkylenether, die mindestens eine Hydroxy- oder Aminogruppe, bevorzugt mindestens eine Hydroxygruppe enthalten. Beispiele hierfür sind die monohydroxyfunktionellen, im statistischen Mittel ≥ 5 bis ≤ 70, bevorzugt ≥ 7 bis ≤ 55 Ethylenoxideinheiten pro Molekül aufweisenden Polyalkylenoxidpolyetheralkohole, wie durch Alkoxylierung geeigneter Startermoleküle zugänglich sind. Diese sind entweder reine Polyethylenoxidether oder gemischte Polyalkylenoxidether, wobei sie ≥ 30 mol-%, bevorzugt ≥ 40 mol-% bezogen auf alle enthaltenen Alkylenoxideinheiten an Ethylenoxideinheiten enthalten.

Bevorzugte Polyethylenoxidether der vorstehend genannten Art sind monofunktionelle gemischte Polyalkylenoxidpolyether, die ≥ 40 mol-% bis ≤ 100 mol-% Ethylenoxid- und ≥ 0 mol-% bis ≤ 60 mol-% Propylenoxideinheiten aufweisen.

Bevorzugte nichtionisch hydrophilierende Verbindungen der Komponente A4) sind solche der vorstehend genannten Art, wobei es sich um Block(co)polymere handelt, die durch blockweise Addition von Alkylenoxiden an geeignete Starter hergestellt werden.

Geeignete Startermoleküle für solche nichtionischen Hydrophilierungsmittel sind gesättigte Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykolmonoalkylether, wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole der vorstehend genannten Art. Besonders bevorzugt werden Diethylenglykolmonobutylether oder n-Butanol als Startermoleküle verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

In einer weiteren Ausführungsform werden in Schritt B) die freien NCO-Gruppen der Prepolymere weiterhin ganz oder teilweise umgesetzt mit
B2) aminofunktionelle Verbindungen mit Molekulargewichten von ≥ 32 g/mol bis ≤ 400 g/mol.

Als Komponente B2) können Di- oder Polyamine wie 1,2-Ethylendiamin, 1,2- und 1,3-Diamino- propan, 1,4-Diaminobutan, 1,6-Diaminohexan, Isophorondiamin, Isomerengemische von 2,2,4- und 2,4,4-Trimethylhexamethylendiamin, 2-Methylpentamethylendiamin, Diethylentriamin, Triaminononan, 1,3- und 1,4-Xylylendiamin, α,α,α',α'-Tetramethyl-1,3-und -1,4-xylylendiamin und 4,4-Diaminodicyclohexylmethan und/oder Dimethylethylendiamin eingesetzt werden. Ebenfalls möglich, aber weniger bevorzugt, ist die Verwendung von Hydrazin sowie Hydraziden wie Adipinsäuredihydrazid.

Darüber hinaus können als Komponente B2) auch Verbindungen, die neben einer primären Aminogruppe auch sekundäre Aminogruppen oder neben einer Aminogruppe (primär oder sekundär) auch OH-Gruppen aufweisen, eingesetzt werden. Beispiele hierfür sind primäre / sekundäre Amine, wie Diethanolamin, 3-Amino-1-methylaminopropan, 3-Amino-1-ethylaminopropan, 3-Amino-1-cyclohexylaminopropan, 3-Amino-1-Methylaminobutan, Alkanolamine wie N-Aminoethylethanolamin, Ethanolamin, 3-Aminopropanol, Neopentanolamin.

Ferner können als Komponente B2) auch monofunktionelle isocyanatreaktive Aminverbindungen, wie beispielsweise Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin oder geeignete substituierte Derivate davon, Amidamine aus diprimären Aminen und Monocarbonsäuren, Monoketime von diprimären Aminen, primär/tertiäre Amine, wie N,N-Dimethylaminopropylamin eingesetzt werden. Bevorzugte Verbindungen der Komponente B2) sind 1,2-Ethylendiamin, 1,4-Diaminobutan und Isophorondiamin.

Bei einer weiteren bevorzugten Ausführungsform ist bei der Herstellung der wässrigen, anionisch hydrophilierten Polyurethan-Dispersionen die Komponente A1) ausgewählt aus der Gruppe 1,6-Hexamethylendiisocyanat, Isophorondiisocyanat und/oder die isomeren Bis-(4,4'-isocyanatocyclohexyl)methane und die Komponente A2) umfasst eine Mischung aus Polycarbonatpolyolen und Polytetramethylenglykolpolyolen, wobei der Anteil der Summe der Polycarbonatpolyole und der Polytetramethylenglykolpolyetherpolyole an der Komponente A2) ≥ 70 Gewichts-% bis ≤ 100 Gewichts-% beträgt.

Gemäß einer weiteren bevorzugten Ausführungsform kann die Zusammensetzung Zusatzstoffe ausgewählt aus der Gruppe Fettsäureamide, Sulfosuccinamide, Kohlenwasserstoffsulfonate, Kohlenwasserstoffsulfate, Fettsäuresalze, Alkylpolyglycoside und/oder Ethylenoxid/Propylenoxid-Blockcopolymere enthalten.

Solche Zusatzstoffe können als Schaumbildner und/oder Schaumstabilisatoren wirken. In den Fettsäureamiden, Sulfosuccinamiden, Kohlenwasserstoffsulfonaten, Kohlenwasserstoffsulfaten oder Fettsäuresalzen enthält der lipophile Rest bevorzugt ≥ 12 bis ≤ 24 Kohlenstoffatome. Geeignete Alkylpolyglycoside sind beispielsweise durch Umsetzung von längerkettigen Monoalkoholen (≥ 4 bis ≤ 22 C-Atome im Alkylrest) mit Mono-, Di- oder Polysacchariden erhältlich. Weiterhin geeignet sind Alkylbenzosulfonate oder Alkylbenzolsulfate mit ≥ 14 bis ≤ 24 Kohlenstoffatomen im Kohlenwasserstoffrest.

Die Fettsäureamide sind vorzugsweise solche auf Basis von Mono- oder Di-(C₂/C₃-alkanol)aminen. Die Fettsäuresalze können beispielsweise Alkalimetallsalze, Aminsalze oder unsubstituierte Ammoniumsalze sein.

Solche Fettsäurederivate basieren typischerweise auf Fettsäuren wie Laurinsäure, Myristinsäure, Palmitinsäure, Ölsäure, Stearinsäure, Ricinolsäure, Behensäure oder Arachidinsäure, Kokosfettsäure, Talgfettsäure, Sojafettsäure und deren Hydrierungsprodukten.

Beispielhaft verwendbare Schaumstabilisatoren sind Mischungen aus Sulfosuccinamiden und Ammoniumstearaten, wobei diese bevorzugt ≥ 20 Gewichts-% bis ≤ 60 Gewichts-% besonders bevorzugt ≥ 30 Gewichts-% bis ≤ 50 Gewichts-% an Ammoniumstearaten und bevorzugt ≥ 40 Gewichts-%, bis ≤ 80 Gewichts-% besonders bevorzugt ≥ 50 Gewichts-% bis ≤ 70 Gewichts-% an Sulfosuccinamiden enthalten.

Weitere beispielhaft verwendbare Schaumstabilisatoren sind Mischungen aus Fettalkohol-Polyglykosiden und Ammoniumstearaten, wobei diese bevorzugt ≥ 20 Gewichts-% bis ≤ 60 Gewichts-% besonders bevorzugt ≥ 30 Gewichts-% bis ≤ 50 Gewichts-% an Ammoniumstearaten und bevorzugt ≥ 40 Gewichts-%, bis ≤ 80 Gewichts-% besonders bevorzugt ≥ 50 Gewichts-% bis ≤ 70 Gewichts-% an Fettalkohol-Polyglykosiden enthalten.

Weitere beispielhaft verwendbare Schaumstabilisatoren sind Ethylenoxid/Propylenoxid-Blockcopolymere.

Neben den Polyurethan-Dispersionen und den Zusatzstoffen kann die Zusammensetzung auch weitere Hilfsstoffe enthalten.

Beispiele für solche Hilfsstoffe sind Verdicker beziehungsweise Thixotropiermittel, Antioxidantien, Lichtschutzmittel, Emulgatoren, Weichmacher, Pigmente, Füllstoffe und/oder Verlaufshilfsmittel.

Als Verdicker können handelsübliche Verdicker wie Dextrin-, Stärke- oder Cellulosederivate wie Celluloseether oder Hydroxyethylcellulose, Polysaccharidderivate wie Gummi arabicum oder Guar, organische vollsynthetische Verdicker auf Basis von Polyacrylsäuren, Polyvinylpyrrolidonen, Poly(meth)acrylverbindungen oder Polyurethanen (assoziative Verdicker) sowie anorganische Verdicker wie Bentonite oder Kieselsäuren eingesetzt werden.

Grundsätzlich können die erfindungsgemäßen Zusammensetzungen auch Vernetzer wie unblockierte Polyisocyanate, Amid- und Amin-Formaldehydharze, Phenolharze, Aldehyd- und Ketonharze, wie zum Beispiel Phenol-Formaldehydharze, Resole, Furanharze, Harnstoffharze, Carbamidsäureesterharze, Triazinharze, Melaminharze, Benzoguanaminharze, Cyanamidharze oder Anilinharze enthalten.

In einer bevorzugten Rezeptur zur Herstellung der Polyurethan-Dispersionen werden die Komponenten A1) bis A4) und B1) bis B2) in den folgenden Mengen eingesetzt, wobei sich die Einzelmengen stets zu 100 Gewichts-% addieren:
≥ 5 Gewichts-% bis ≤ 40 Gewichts-% der Komponente A1);
≥ 55 Gewichts-% bis ≤ 90 Gewichts-% der Komponente A2);
≥ 0,5 Gewichts-% bis ≤ 20 Gewichts-% der Summe der Komponenten A3) und B2);
≥ 0,1 Gewichts-% bis ≤ 25 Gewichts-% der Summe der Komponenten A4) und B1), wobei bezogen auf die Gesamtmengen der Komponenten A1) bis A4) und B1) bis B2) ≥ 0,1 Gewichts-% bis ≤ 5 Gewichts-% an anionischen oder potentiell anionischen Hydrophilierungsmitteln aus A4) und/oder B1) verwendet werden.

In einer weiteren bevorzugten Rezeptur zur Herstellung der Polyurethan-Dispersionen werden die Komponenten A1) bis A4) und B1) bis B2) in den folgenden Mengen eingesetzt, wobei sich die Einzelmengen stets zu 100 Gewichts-% aufaddieren:
≥ 5 Gewichts-% bis ≤ 35 Gewichts-% der Komponente A1);
≥ 60 Gewichts-% bis ≤ 90 Gewichts-% der Komponente A2);
≥ 0,5 Gewichts-% bis ≤ 15 Gewichts-% der Summe der Komponenten A3) und B2);
≥ 0,1 Gewichts-% bis ≤ 15 Gewichts-% der Summe der Komponenten A4) und B1), wobei bezogen auf die Gesamtmengen der Komponenten A1) bis A4) und B1) bis B2) ≥ 0,2 Gewichts-% bis ≤ 4 Gewichts-% an anionischen bzw. potentiell anionischen Hydrophilierungsmitteln aus A4) und/oder B1) verwendet werden.

In einer ganz besonders bevorzugten Rezeptur zur Herstellung der Polyurethan-Dispersionen werden die Komponenten A1) bis A4) und B1) bis B2) in den folgenden Mengen eingesetzt, wobei sich die Einzelmengen stets zu 100 Gewichts-% aufaddieren:
≥ 10 Gewichts-% bis ≤ 30 Gewichts-% der Komponente A1);
≥ 65 Gewichts-% bis ≤ 85 Gewichts-% der Komponente A2);
≥ 0,5 Gewichts-% bis ≤ 14 Gewichts-% der Summe der Komponenten A3) und B2);
≥ 0,1 Gewichts-% bis ≤ 13,5 Gewichts-% der Summe der Komponenten A4) und B1), wobei bezogen auf die Gesamtmengen der Komponenten A1) bis A4) und B1) bis B2) ≥ 0,5 Gewichts-% bis ≤ 3,0 Gewichts-% an anionischen oder potentiell anionischen Hydrophilierungsmitteln aus A4) und/oder B1) verwendet werden.

Die Herstellung der anionisch hydrophilierten Polyurethan-Dispersionen kann in einer oder mehreren Stufe/-n in homogener oder bei mehrstufiger Umsetzung, teilweise in disperser Phase durchgeführt werden. Nach vollständig oder teilweise durchgeführter Polyaddition aus A1 ) bis A4) erfolgt ein Dispergier-, Emulgier- oder Lösungsschritt. Im Anschluss erfolgt gegebenenfalls eine weitere Polyaddition oder Modifikation in disperser Phase. Dabei können Verfahren wie beispielsweise Prepolymer-Mischverfahren, Acetonverfahren oder Schmelzdispergierverfahren verwendet werden. Bevorzugt wird das Aceton-Verfahren eingesetzt.

Bei der Herstellung nach dem Aceton-Verfahren werden üblicherweise die Bestandteile A2) bis A4) und die Polyisocyanatkomponente A1) zur Herstellung eines isocyanatfunktionellen Polyurethan-Prepolymers ganz oder teilweise vorgelegt und gegebenenfalls mit einem mit Wasser mischbaren aber gegenüber Isocyanatgruppen inerten Lösungsmittel verdünnt und auf Temperaturen im Bereich von ≥ 50 °C bis ≤ 120 °C aufgeheizt. Zur Beschleunigung der Isocyanatadditionsreaktion können die in der Polyurethan-Chemie bekannten Katalysatoren eingesetzt werden.

Geeignete Lösungsmittel sind die üblichen aliphatischen, ketofunktionellen Lösemittel wie Aceton oder 2-Butanon, die nicht nur zu Beginn der Herstellung, sondern gegebenenfalls in Teilen auch später zugegeben werden können. Bevorzugt sind Aceton und 2-Butanon.

Andere Lösemittel wie Xylol, Toluol, Cyclohexan, Butylacetat, Methoxypropylacetat, N-Methylpyrrolidon, N-Ethylpyrrolidon, Lösemittel mit Ether- oder Estereinheiten können zusätzlich eingesetzt und ganz oder teilweise abdestilliert werden oder vollständig im Falle von N- Methylpyrrolidon, N-Ethylpyrrolidon in der Dispersion verbleiben. Bevorzugt werden aber außer den üblichen aliphatischen, ketofunktionellen Lösemitteln keine anderen Lösungsmittel verwendet.

Anschließend werden die gegebenenfalls zu Beginn der Reaktion noch nicht zugegebenen Bestandteile von A1) bis A4) zudosiert.

Bei der Herstellung des Polyurethan-Prepolymeren aus A1) bis A4) beträgt das Stoffmengenverhältnis von Isocyanatgruppen zu mit isocyanatreaktiven Gruppen beispielsweise ≥ 1,05 bis ≤ 3,5, bevorzugt ≥ 1,2 bis ≤ 3,0 und besonders bevorzugt ≥ 1,3 bis ≤ 2,5.

Die Umsetzung der Komponenten A1) bis A4) zum Prepolymer erfolgt teilweise oder vollständig, bevorzugt aber vollständig. Es werden so Polyurethan-Prepolymere, die freie Isocyanatgruppen enthalten, in Substanz oder in Lösung erhalten.

Im Neutralisationsschritt zur teilweisen oder vollständigen Überführung potentiell anionischer Gruppen in anionische Gruppen werden Basen wie tertiäre Amine, zum Beispiel Trialkylamine mit ≥ 1 bis ≤ 12, bevorzugt ≥ 1 bis ≤ 6 C-Atomen, besonders bevorzugt ≥ 2 bis ≤ 3 C-Atomen in jedem Alkylrest oder Alkalimetallbasen wie die entsprechenden Hydroxide eingesetzt.

Beispiele hierfür sind Trimethylamin, Triethylamin, Methyldiethylamin, Tripropylamin, N-Methylmorpholin, Methyldiisopropylamin, Ethyldiisopropylamin und Diisopropylethylamin. Die Alkylreste können beispielsweise auch Hydroxylgruppen tragen, wie bei den Dialkylmonoalkanol-, Alkyldialkanol- und Trialkanolaminen. Als Neutralisationsmittel sind gegebenenfalls auch anorganische Basen, wie wässrige Ammoniaklösung oder Natrium- bzw. Kaliumhydroxid einsetzbar.

Bevorzugt sind Ammoniak, Triethylamin, Triethanolamin, Dimethylethanolamin oder Diisopropylethylamin sowie Natriumhydroxid und Kaliumhydroxid, besonders bevorzugt sind Natriumhydroxid und Kaliumhydroxid.

Die Stoffmenge der Basen kann zwischen ≥ 50 mol-% und ≤ 125 mol%, bevorzugt zwischen ≥ 70 mol-% und ≤ 100 mol% der Stoffmenge der zu neutralisierenden Säuregruppen betragen. Die Neutralisation kann auch gleichzeitig mit der Dispergierung erfolgen, indem das Dispergierwasser bereits das Neutralisationsmittel enthält.

Im Anschluss wird in einem weiteren Verfahrensschritt, falls noch nicht oder nur teilweise geschehen das erhaltene Prepolymer mit Hilfe von aliphatischen Ketonen wie Aceton oder 2-Butanon gelöst.

Bei der Kettenverlängerung in Stufe B) werden NH₂- und/oder NH-funktionelle Komponenten mit den noch verbliebenen Isocyanatgruppen des Prepolymers teilweise oder vollständig umgesetzt. Bevorzugt wird die Kettenverlängerung vor der Dispergierung in Wasser durchgeführt.

Zur Kettenterminierung werden üblicherweise Amine B2) mit einer gegenüber Isocyanaten reaktiven Gruppe wie Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin, bzw. geeignete substituierte Derivate davon, Amidamine aus diprimären Aminen und Monocarbonsäuren, Monoketime von diprimären Aminen, primär/tertiäre Amine, wie N,N-Dimethylaminopropylamin verwendet.

Werden zur teilweisen oder vollständigen Kettenverlängerung anionische oder potentiell anionische Hydrophilierungsmittel entsprechend der Definition B1) mit NH₂- oder NH-Gruppen eingesetzt, erfolgt die Kettenverlängerung der Prepolymere bevorzugt vor der Dispergierung.

Die aminischen Komponenten B1) und B2) können gegebenenfalls in wasser- oder lösemittelverdünnter Form im erfindungsgemäßen Verfahren einzeln oder in Mischungen eingesetzt werden, wobei grundsätzlich jede Reihenfolge der Zugabe möglich ist.

Wenn Wasser oder organische Lösemittel als Verdünnungsmittel mit verwendet werden, so beträgt der Verdünnungsmittelgehalt in der in B) eingesetzten Komponente zur Kettenverlängerung bevorzugt ≥ 70 bis ≤ 95 Gewichts-%.

Die Dispergierung erfolgt bevorzugt im Anschluss an die Kettenverlängerung. Dazu wird das gelöste und kettenverlängerte Polyurethanpolymer gegebenenfalls unter starker Scherung, wie zum Beispiel starkem Rühren, entweder in das Dispergierwasser eingetragen oder es wird umgekehrt das Dispergierwasser zu den kettenverlängerte Polyurethanpolymerlösungen gerührt. Bevorzugt wird das Wasser in das gelöste kettenverlängerte Polyurethanpolymer gegeben.

Das in den Dispersionen nach dem Dispergierschritt noch enthaltene Lösemittel wird üblicherweise anschließend destillativ entfernt. Eine Entfernung bereits während der Dispergierung ist ebenfalls möglich.

Der Restgehalt an organischen Lösemitteln in den Polyurethan-Dispersionen beträgt typischerweise ≤ 1,0 Gew.-%, bevorzugt ≤ 0,5 Gew.-%, bezogen auf die gesamte Dispersion.

Der pH-Wert der erfindungsgemäßen Polyurethan-Dispersionen beträgt typischerweise ≤ 9,0, bevorzugt ≤ 8,5, besonders bevorzugt weniger als ≤ 8,0 und liegt ganz besonders bevorzugt bei ≥ 6,0 bis ≤ 7,5.

Der Feststoffgehalt der Polyurethan-Dispersionen beträgt bevorzugt ≥ 40 bis ≤ 70 Gewichts-%, besonders bevorzugt ≥ 50 bis ≤ 65 Gewichts-%, ganz besonders bevorzugt ≥ 55 bis ≤ 65 Gewichts-% und insbesondere ≥ 60 bis ≤ 65 Gewichts-%.

Gemäß einer weiteren Ausführungsform der Erfindung ist vorgesehen, dass die thermoplastische Folie (1) Materialen beinhaltet ausgewählt aus der Gruppe bestehend aus Polyurethan, Polystyrol, Polyvinylchlorid, Polyether, Polyester, Copolyester, Polyamid, Copolyamid, Polycarbonat, Polyether-Polyamid-Copolymeren, Polyacrylat, Polymethacrylat, Acrylnitril-Butadien-Styrol und/oder Polymaleat oder einer Kombination aus mindestens zwei hiervon, vorzugsweise aus Polyurethan, Acrylnitril-Butadien-Styrol, Polyvinylchlorid und/oder Polycarbonat oder einer Kombination aus mindestens zwei hiervon.

Möglich ist auch, dass die thermoplastische Folie (1) das für die Herstellung des Polymerschaums verwendete Polymer umfasst. Ganz besonders bevorzugt ist, wenn die thermoplastische Folie lineare Polyurethane enthält oder daraus besteht.

Sofern eine weitere thermoplastische Folie (1') im erfindungsgemäßen Verfahren zugeführt wird, so kann diese gleich oder verschieden zu der thermoplastischen Folie (1) sein und aus den vorstehend beschriebenen Materialien bestehen. Vorzugsweise sind die thermoplastischen Folien (1) und (1') gleich.

Weiter kann die thermoplastische Folie (1) und/oder (1') auf ihrer der Schaumschicht abgewandten Seite eine Klebeschicht aufweisen.

Die Funktionseinheit (3) kann auf einer Trägerschicht auf Rolle, oder in einem Magazin umfassend die Funktionseinheit (3) bereitgestellt werden. Die Trägerschicht kann beispielsweise Papier, PET-Folie, PC-Folie oder TPU-Folie sein.

Die Funktionseinheit (3) kann ein Sensor, insbesondere ein Sensor zur Messung von physiologischen Daten oder ein Wirkstoffdepot, insbesondere enthaltend einen pharmazeutischer Wirkstoff, sein.

Beispiele für Sensoren sind Herzton-Sensoren, Temperatur-Sensoren, EKG-Sensoren, Blutdruck-Sensoren, Blutzucker-Sensoren, Puls-Sensoren, Sauerstoffsättigungs-Sensoren, Lungenfunktions-Sensoren, Bildgebungs-Sensoren oder Sensoren zur Bestimmung der Hautfeuchtigkeit.

Es ist ebenfalls möglich, dass es sich bei der Funktionseinheit um LED-Lampen für die Lichttherapie handelt.

Beispiele für Wirkstoffdepots sind Iontophorese-Patches oder dick- bis dünnflüssige Wirkstoff-Dispersionen.

Beispiele für Wirkstoffe sind Schmerzmittel, Antibiotika, Stoffe zur Hautregeneration, Insulin, Nicotin, Stoffe, die die Wundheilung unterstützen.

Der nach dem erfindungsgemäßen Verfahren hergestellte umhüllte Artikel kann mit einer weiteren Folie, umfassend eine Klebstoffschicht beispielsweise auf der Haut fixiert werden.

Sofern der nach dem erfindungsgemäßen Verfahren hergestellte umhüllte Artikel eine Klebstoffschicht aufweist, kann dieser direkt auf der Haut fixiert werden.

## Patentansprüche

1. Verfahren zur Herstellung eines umhüllten Artikels, **dadurch gekennzeichnet, dass**
i. eine thermoplastische Folie (1) auf einer Rolle,
eine thermoplastische Schaumschicht (2) auf einer Rolle, und
eine Funktionseinheit (3) bereitgestellt werden, oder
ein Laminat, umfassend eine thermoplastische Folie (1) und eine thermoplastische Schaumschicht (2) und eine Funktionseinheit (3) bereitgestellt werden,
ii. die thermoplastische Folie (1) und die thermoplastische Schaumschicht (2) oder das Laminat umfassend die thermoplastische Folie (1) und die thermoplastische Schaumschicht (2) über Rolle kontinuierlich zugeführt werden und die Funktionseinheit (3), auf die thermoplastische Schaumschicht zugeführt wird, so dass die Funktionseinheit (3) wenigstens teilweise durch die Schaumschicht umhüllt wird,
iii. gegebenenfalls. die thermoplastische Folie (1) und die thermoplastische Schaumschicht (2), die die Funktionseinheit (3) wenigstens teilweise umhüllt, bei einer Temperatur in einem Bereich von 60 bis 250 °C laminiert werden, so dass die Schaumeigenschaften weitgehend erhalten bleiben,
iv. Verschweißung der thermoplastischen Folie (1) und der thermoplastischen Schaumschicht (2) im Randbereich bei einem Druck in einem Bereich von 100 bis 300 bar und einer Temperatur in einem Bereich von 60 °C bis 250°C, für einen Zeitraum in einem Bereich von 1 bis 300 Sekunden, unter Erhalt einer Schweißnaht.
v. gegebenenfalls Ausstanzen des umhüllten und verschweißten Artikels entlang der Schweißnaht.

2. Verfahren gemäß Anspruch 1, wobei die thermoplastische Schaumschicht (2) vor Schritt ii auf eine Temperatur in einem Bereich von 120 bis 250 °C erwärmt wird und durch Aufbringen der Funktionseinheit (3) thermoplastisch verformt wird, oder durch Aufbringen eines auf eine Temperatur von 120 bis 250 °C erwärmten Stanzwerkzeugs auf die thermoplastische Schaumschicht (2), thermoplastische Verformung der Schicht (2) im Bereich des Stanzwerkzeugs und Zuführung der Funktionseinheit (3) in den so vorgeformten Bereich.

3. Verfahren gemäß Anspruch 1 oder 2, **dadurch gekennzeichnet, dass** die thermoplastische Schaumschicht (2) einen thermoplastischen Polymerschaum umfasst.

4. Verfahren gemäß einem der Ansprüche 1 bis 3, wobei in Schritt i. eine weitere thermoplastische Schaumschicht (2') und/oder eine weitere thermoplastische Folie (1') auf einer Rolle bereitgestellt werden und in Schritt ii. die weitere thermoplastische Schaumschicht (2') und/oder die thermoplastische Folie (1') kontinuierlich über Rolle so zugeführt werden, dass die Funktionseinheit (3) entweder von beiden Seiten mit der thermoplastischen Schaumschicht (2 und 2') bedeckt ist oder von einer Seite mit der thermoplastischen Schaumschicht (2) und von der anderen Seite von der thermoplastischen Folie (1') bedeckt ist.

5. Verfahren gemäß einem der Ansprüche 1 bis 4, wobei die Verschweißung in Schritt iv. im Ultraschall-Schweißverfahren erfolgt.

6. Verfahren gemäß einem der Ansprüche 1 bis 5, wobei die Schweißnaht in Schritt iv. die Funktionseinheit (3) vollständig einschließt.

7. Verfahren gemäß einem der Ansprüche 1 bis 6, wobei die thermoplastische Folie (1) oder (1') auf der von der Schaumschicht (2) abgewandten Seite eine Klebstoffschicht umfasst.

8. Verfahren gemäß einem der Ansprüche 1 bis 7, wobei die thermoplastische Schaumschicht (2) lineare Polyurethane enthält.

9. Verfahren gemäß einem der Ansprüche 1 bis 7, wobei die thermoplastische Schaumschicht (2) erhältlich ist, indem eine Zusammensetzung umfassend eine wässrige, anionisch hydrophilierte Dispersion der linearen Polyurethane aufgeschäumt und getrocknet wird.

10. Verfahren gemäß Anspruch 9, wobei die wässrige, anionisch hydrophilierte Dispersion lineare Polyurethane erhältlich ist, indem
A) isocyanatfunktionelle Prepolymere bereitgestellt werden, die aus einer Reaktionsmischung umfassend
A1) organische Polyisocyanate und
A2) polymere Polyole, bevorzugt mit zahlenmittlerem Molekulargewichten von ≥ 400 g/mol bis ≤ 8000 g/mol und einer OH-Funktionalität von ≥ 1,5 bis ≤ 6, erhältlich sind und
B) die freien NCO-Gruppen der Prepolymere ganz oder teilweise mit B1) isocyanatreaktiven anionischen oder potentiell anionischen Hydrophilierungsmitteln
unter Kettenverlängerung umgesetzt werden und die Prepolymere vor, während oder nach Schritt B) in Wasser dispergiert werden, wobei weiterhin in der Reaktionsmischung vorliegende potentiell ionischen Gruppen durch die teilweise oder vollständige Umsetzung mit einem Neutralisierungsmittel in die ionische Form überführt werden.

11. Verfahren gemäß einem der Ansprüche 1 bis 10, wobei die thermoplastische Schaumschicht (2) eine Dicke von ≥ 0,025 mm bis ≤ 10,0 mm aufweist.

12. Verfahren gemäß einem der Ansprüche 1 bis 11, wobei die thermoplastische Folie (1) Materialien beinhaltet ausgewählt aus der Gruppe bestehend aus Polyurethan, Polystyrol, Polyvinylchlorid, Polyether, Polyester, Copolyester, Polyamid, Copolyamid, Polycarbonat, Polyether-Polyamid-Copolymeren, Polyacrylat, Polymethacrylat, Acrylnitril-Butadien-Styrol und/oder Polymaleat oder einer Kombination aus mindestens zwei hiervon.

13. Verfahren gemäß einem der Ansprüche 1 bis 12, wobei die Funktionseinheit (3) ein Sensor, oder ein Wirkstoffdepot ist.
